# EUROPÄISCHE PATENTSCHRIFT

(11) **EP 1 457 002 B1**
(45) Veröffentlichungstag und Bekanntmachung des Hinweises auf die Patenterteilung: **24.05.2006**
(21) Anmeldenummer: 02791640.2
(22) Anmeldetag: 17.12.2002
(51) Int. Cl.: H04L 12/24, H04Q 3/00, G06F 17/30

(54) **PERSISTENTE SPEICHERUNG VON NETZWERKMANAGEMENTDATEN UNTER VERWENDUNG VON OBJEKTREFERENZEN**
PERSISTENT STORAGE OF NETWORK MANAGEMENT DATA USING OBJECT REFERENCES
STOCKAGE PERSISTANT DE DONNEES DE GESTION DE RESEAU A L'AIDE DE REFERENCES D'OBJETS

(30) Priorität: 21.12.2001 DE 10163533
(43) Veröffentlichungstag der Anmeldung: 15.09.2004
(73) Patentinhaber: SIEMENS AKTIENGESELLSCHAFT, 80333 München (DE)
(72) Erfinder: KAMMHUBER, Wolfgang, 81827 München (DE)
(86) Internationale Anmeldenummer: PCT/DE2002/004618
(87) Internationale Veröffentlichungsnummer: WO 2003/056757

(56) Entgegenhaltungen:
- EP-A- 0 977 400
- GB-A- 2 344 963
- US-A- 5 414 812
- GONCALVES P R R ET AL: "Telecommunications services management with computational reflection, using CORBA and JAVA" TELECOMMUNICATIONS SYMPOSIUM, 1998. ITS '98 PROCEEDINGS. SBT/IEEE INTERNATIONAL SAO PAULO, BRAZIL 9-13 AUG. 1998, NEW YORK, NY, USA,IEEE, US, 9. August 1998 (1998-08-09), Seiten 486-491, XP010300833 ISBN: 0-7803-5030-8
- WEINSTOCK J ET AL: "An object-oriented approach to the management of distributed application systems" COMPUTER NETWORKS AND ISDN SYSTEMS, NORTH HOLLAND PUBLISHING. AMSTERDAM, NL, Bd. 29, Nr. 16, 15. Dezember 1997 (1997-12-15), Seiten 1869-1879, XP004107249 ISSN: 0169-7552

## Beschreibung

Die vorliegende Erfindung betrifft Netzwerke, die eine Vielzahl von Netzwerkkomponenten enthalten, und befasst sich insbesondere mit dem Netzwerkmanagement eines solchen Netzwerks.

Netzwerke wie etwa Rechnernetze sind nicht mehr nur unterstützende Elemente in einem Unternehmen, sondern nehmen immer häufiger eine Schlüsselstellung ein. Die Anzahl der vernetzten Rechner ist in der Vergangenheit stets stark, zum Teil sprunghaft gestiegen, und auch die Komplexität und Funktionalität der Komponenten wächst entsprechend den Leistungssteigerungen der zugrundeliegenden Hardware.

Dabei sind Netzwerke oftmals und in immer stärkerem Maße heterogen strukturiert. Beispielsweise bestehen moderne, komplexe Multiservice-Kommunikationsnetze aus vielen unterschiedlichen Netzwerkkomponenten, zwischen denen verschiedenartige Beziehungen bestehen. Netzwerkkomponenten sind beispielsweise Netzwerkelemente wie Router und Switches, aber auch Kommunikationsprofile für Protokolle wie IP (Internet Protocol) und ATM (Asynchronous Transfer Mode) und physikalische und logische Kommunikationsverbindungen.

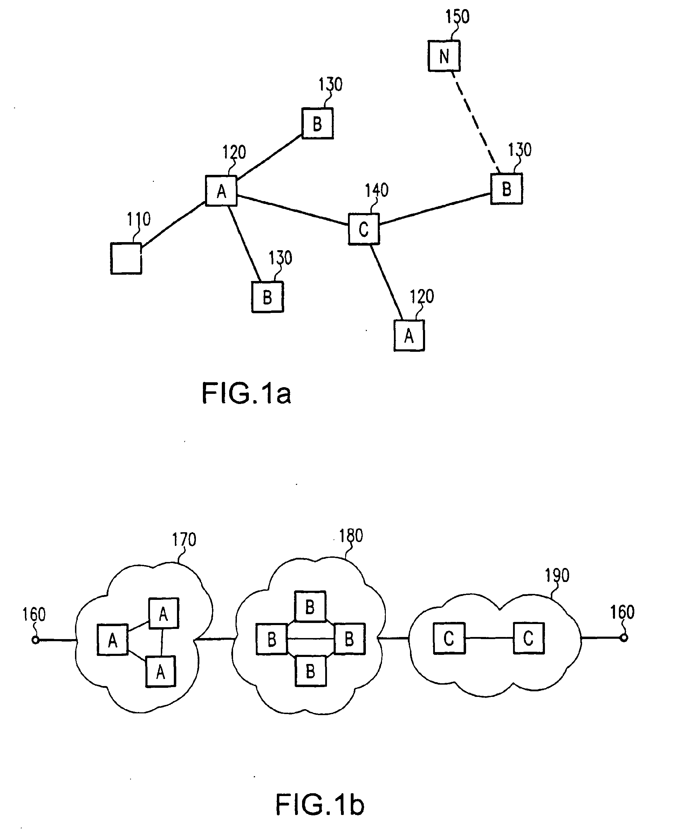

Ein Beispiel eines heterogenen Netzwerks ist in Fig. 1a gezeigt, in dem Netzwerkkomponenten 120, 130, 140 verschiedener Typen A, B, C miteinander zu einem Netzwerk verbunden sind. Um die Funktionsbereitschaft eines solchen Netzes sicherzustellen, werden Netzwerkmanagementsysteme 110 eingesetzt.

Aufgaben eines Netzwerkmanagementsystems sind beispielsweise die Aufrechterhaltung von Serviceleistungen, Verfügbarkeit und Antwortzeiten, die Sicherung der Dienstgüte durch die Überwachung der Komponenten und vorbeugende Fehler- und Engpassbehebung. Ferner unterliegen Managementsysteme der Anforderung, automatisch oder halbautomatisch auf Betriebsstörungen zu reagieren, indem im Fehlerfall die Konfiguration des Netzwerkes in Echtzeit geändert wird. Es gehört beispielsweise auch zu den Aufgaben von Managementsystemen, im Fehlerfall redundante Komponenten zu aktivieren. Ferner müssen Managementsysteme dynamisch auf Änderungen im Netz und in der Netzwerkumgebung reagieren, beispielsweise bezüglich Anwendungen, Teilnehmern, Komponenten, Diensten und Gebühren. Beispielsweise müssen aber auch dynamische Anpassungen der Übertragungsbandbreiten vorgenommen werden können.

Als Netzwerkmanagementwerkzeuge kommen daher auch Testgeräte zum Einsatz, mit denen die verlegten Kabel überprüft werden können. Ferner werden auch Netzwerkmonitore eingesetzt, mit denen der Datenverkehr auf dem Netz beobachtet und analysiert werden kann. Eine umfassendere Möglichkeit des Netzwerkmanagements bieten Managementsysteme, die auf bestimmten Netzmanagementstandards basieren, wie etwa SNMP (Simple Network Management Protocol).

Netzwerkmanagementsysteme bieten daher eine Möglichkeit, Netzwerke von zentraler Stelle aus zu überwachen, zu administrieren und zu konfigurieren, und umfassen daher auch die Funktionen eines Netzwerkmonitors und eines Netzwerkanalysewerkzeugs. Inhaltlich lassen sich die Aufgaben des Netzwerkmanagements aufteilen in Konfigurationsmanagement, Fehlermanagement und Leistungsmanagement. Das Konfigurationsmanagement dient zur Darstellung und Manipulation unterschiedlicher Netzwerkkomponenten wie Hub-Systemen, Brücken und Router. Das Fehlermanagement dient dem Aufspüren, der Analyse und der Behebung von Fehlern insbesondere im heterogenen Umfeld. Hierzu werden beispielsweise Protokollpakete analysiert und die ermittelten Daten interpretiert. Das Leistungsmanagement liefert Informationen über die Leistungsfähigkeit von Komponenten und Verbindungen durch ständige Analyse des Netzwerks.

Um diese Anforderungen zu erfüllen, müssen Programme zum Management der Netzwerke die Gesamttopologie und die Zustände des Netzwerks kennen. Beispielsweise stellt sich im Netzwerkmanagement die Aufgabe, eine End-End-Verbindung zu analysieren und zu konfigurieren. Eine solche Verbindung ist in Fig. 1b gezeigt, wo zwischen Endpunkten 160 die physikalischen Einheiten eines solchen Netzwerkes aufgezeigt sind. Wie der Figur zu entnehmen ist, sind verschiedene Netzwerkkomponenten verschiedener Typen A, B, C in verschiedene Sub-Netze 170, 180, 190 aufgeteilt, die auch als Domänen bezeichnet werden. Eine Netzwerkverbindungen zwischen den Endpunkten 160 erfolgt im vorliegenden Beispiel somit über verschiedene Domänen, die verschiedenartige Netzwerkkomponenten enthalten, die untereinander durch verschiedenartige physikalische und logische Verbindungen miteinander verbunden sind und auch verschiedenen Protokollen gehorchen können. Ein Netzwerkmanagementsystem, das eine solche End-End-Verbindung verwalten soll, muss daher alle Informationen über die Netzwerkressourcen abrufen können.

Da Netzwerke meist länger bestehen als die durchschnittliche Laufzeit eines Managementprogramms, müssen die Daten, die diese Informationen über die Netzwerkressourcen enthalten, außerhalb der Programme persistent abgespeichert werden, damit sie später wieder eingelesen werden können. Eine persistente Speicherung bedeutet in diesem Zusammenhang das nichtflüchtige Ablegen der Informationen in einem Speicher, der die abgespeicherten Daten über längere Zeit in sich aufnimmt. Die persistente Speicherung kann grundsätzlich auf dem Rechner 110 erfolgen, auf dem das Netzwerkmanagementprogramm läuft. Die Daten können aber auch in einem anderen Netzwerkrechner 120, 130, 140 gespeichert sein, wobei das Netzwerkmanagementprogramm auf Rechner 110 über Mittel zum Zugriff auf diese persistent gespeicherten Daten verfügen muss.

Probleme mit herkömmlichen Netzwerkmanagementsystemen ergeben sich oft dadurch, dass die Netzwerktechnologien schnell und dynamisch weiterentwickelt werden und sich die Netzwerke daher ständig erweitern. Diese Erweiterungen können sowohl quantitativ als auch qualitativ sein, d.h. sie können durch Hinzufügen weiterer Netzwerkkomponenten und Teilnehmer erfolgen, aber auch durch Hinzufügen neuartiger Typen von Netzwerkkomponenten bzw. durch Abänderung bestehender Typen in neue Typen. Die Netzwerkerweiterung ist in Fig. 1a verdeutlicht, wo ein bestehendes Netzwerk durch eine Netzwerkkomponente 150 eines neuartigen Typs N ergänzt wird. Hierdurch entstehend die folgenden Probleme.

Da die Netzwerkmanagementstation 110 das Netzwerk nur dann überwachen, verwalten, analysieren und konfigurieren kann, wenn es über alle notwendigen Informationen über die im Netzwerk enthaltenen Komponenten verfügt, muss das System entsprechende Informationen von den Komponenten oder von anderer Stelle abrufen können. Wenn zu dem Netzwerk daher eine neue Komponente eines bisher unbekannten Typs N hinzugefügt wird, kann das Netzwerkmanagementsystem Informationen über diese Komponente nicht abrufen, da das Netzwerkmanagementprogramm noch über keine Mittel verfügt, um die Informationen bezüglich des neuartigen Typs N abzufragen. Das Netzwerkmanagementprogramm muss daher um ein entsprechendes Modul erweitert werden, das für die Kommunikation mit Netzwerkkomponenten des Typs N eingerichtet wurde.

Ein weiteres Problem ergibt sich daraus, dass jede Netzwerkkomponente Daten in einem anderen Datenformat liefert oder liefern kann. Wenn dem Netzwerk eine neuartige Komponente hinzugefügt wird, muss das Netzwerkmanagementprogramm diese Daten daher in einem gesonderten Speicher ablegen oder den bestehenden Speicher durch Hinzufügen von Datenfeldern des neuen Formats ergänzen. Es sind somit auch Änderungen bei der persistenten Speicherung erforderlich, die aufwendig sind und sogar eine Neuimplementierung erfordern können.

Die vorgenannten Probleme treten bei Hinzufügen einer neuartigen Komponente auf, aber auch bei Aktivierung eines neuartigen Protokolls oder bei Abänderung bestehender Komponenten oder Protokolle.

Daher bedingt die qualitative Erweiterung der Netzwerktechnologien bisher in der Regel einen erheblichen Aufwand durch einen Upgrade der existierenden Netzwerkmanagementlösungen oder durch aufwendige Synchronisierung für das gesamte Managementsystem und seine persistenten Daten. In der Regel müssen bei qualitativer Erweiterung des Netzwerks Programmversionen ausgetauscht werden, wobei auch oft solche Programme ersetzt werden müssen, die gar nicht funktional erweitert worden sind, aber mit den erweiterten Objekten ohne Codeanpassung nicht mehr zusammenarbeiten würden. Der im Stand der Technik folglich notwendige Programmaustausch führt somit zu unerwünschten und kostenintensiven Betriebsunterbrechungen.

Der Erfindung liegt daher die Aufgabe zugrunde, ein Verfahren zum Durchführen eines Netzwerkmanagements anzugeben, sowie ein Netzwerkmanagementsystem, die es erlauben, qualitative Änderungen im Netzwerk ohne Betriebsunterbrechung zu erfassen, auszuwerten und vorzunehmen bzw. auszuführen.

Diese Aufgabe wird durch die in den unabhängigen Ansprüchen definierte Erfindung gelöst.

Erfindungsgemäß werden zur persistenten Speicherung der Netzwerkmanagementdaten Objektreferenzen verwendet, mit deren Hilfe die Netzwerkmanagementdaten in generischer Weise ermittelt werden können. Da das Managementsystem Referenzen speichert, kann es auch Referenzen auf solche Objekte speichern, die zum Zeitpunkt der Erstellung des Netzwerkmanagementprogramms unbekannt waren. Somit können beliebige Mengen von auch untereinander referenzierten Objekten verschiedener Objekttypen (Klassen) vollständig generisch in einen persistenten Speicher ausgelagert und von diesem wieder eingelesen werden, ohne dass eine Änderung des bestehenden Programmcodes erforderlich ist. Änderungen im Datenmodell können folglich vollständig transparent für bestehende Programme erfolgen, so dass keine Unterbrechung des Betriebs laufender Programme erforderlich ist.

Bevorzugte Ausgestaltungen der Erfindung sind in den Unteransprüchen angegeben.

Die Realisierung der Erfindung durch objektorientierte Programmierung erlaubt die Abspeicherung der Referenzen in einem abstrakten, vereinheitlichten Datenmodell. Dies ist nicht nur zur Erzielung höchster Betriebssicherheit vorteilhaft sondern erlaubt auch die Verwendung bestehender Programmiermechanismen in einfacher Weise.

Zur genaueren Beschreibung von Ausführungsbeispielen der Erfindung wird im Folgenden auf die Figuren Bezug genommen, in denen:
- Fig. 1a: eine Darstellung eines heterogenen Netzwerks mit einer Netzwerkmanagementstation und einer Netzwerkkomponente eines neuartigen Typs ist;
- Fig. 1b: eine Darstellung der physikalischen Komponenten einer End-End-Verbindung mit mehreren Domänen ist;
- Fig. 2: die Elemente eines Netzwerkmanagementsystems in eine bevorzugten Ausgestaltung der Erfindung zeigt;
- Fig. 3: ein Flussdiagramm des Prozesses der Rekonstruktion eines Objekts aus einer Referenz gemäß einer bevorzugten Ausgestaltung der Erfindung ist; und
- Fig. 4: ein Flussdiagramm eines Prozesses zur Ermittlung der Beschreibung eines Netzwerkes ist.

Die Erfindung wird nun unter Bezugnahme auf die Figuren näher erläutert.

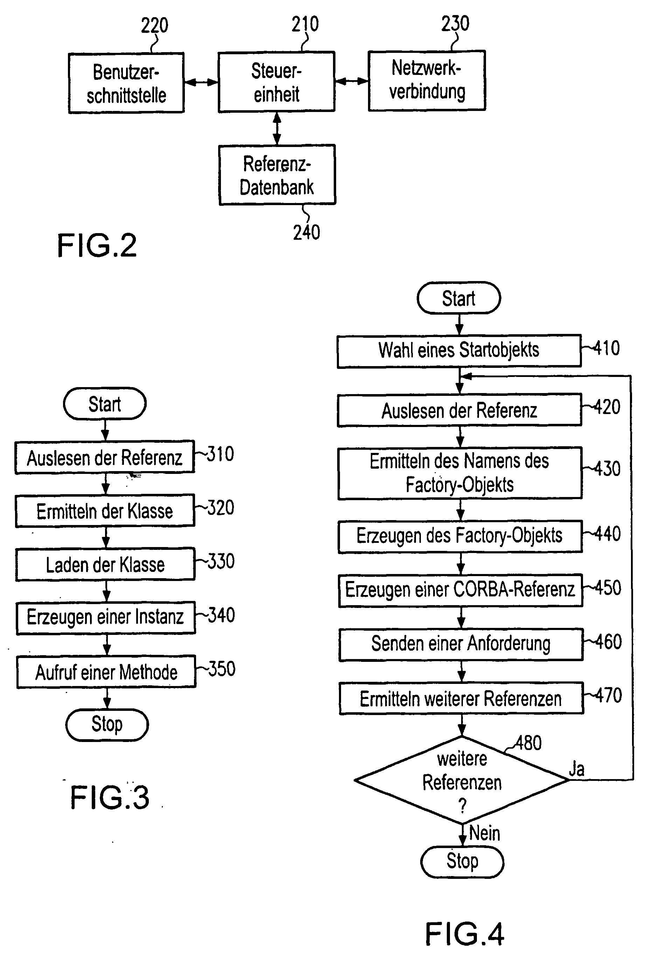

Fig. 2 zeigt die Grundkomponenten einer Netzwerkmanagementstation 110 gemäß einer bevorzugten Ausgestaltung der vorliegenden Erfindung. Eine zentrale Steuereinheit 210 steht in Verbindung mit einer Benutzerschnittstelle 220. Die Benutzerschnittstelle erlaubt dem Operator die Kontrolle über die Netzwerkmanagementdaten. Die Steuereinheit 210 ist ferner mit einer Netzwerkeinheit 230 verbunden, über die die Anbindung an das Netzwerk erfolgt. Ferner ist eine Referenzdatenbank 240 vorgesehen, die die Referenzen persistent speichert. Die Referenzdatenbank ist vorzugsweise eine relationale Datenbank.

Obwohl in dem Ausführungsbeispiel von Fig. 2 die Referenzdatenbank 240 als mit der Steuereinheit 210 verbunden dargestellt ist, kann in einer anderen bevorzugten Ausgestaltung der Erfindung die Referenzdatenbank 240 auf einem Netzwerkrechner gespeichert sein. Der Zugriff auf die persistent abgelegten Referenzen erfolgt dann durch die Steuereinheit 210 über die Netzwerkverbindung 230.

Die in der Referenzdatenbank 240 abgelegten Referenzen referenzieren Objekte. Ein Objekt ist die programmtechnische Repräsentation eines physikalischen Geräts in einem Netzwerk, beispielsweise eines IP-Routers oder einer Telefonvermittlungsanlage. Ein Objekt kann auch ein definiertes Bauteil oder eine Baugruppe aus einem solchen physikalischen Gerät repräsentieren, also beispielsweise ein Netzteil oder eine Anschlussbuchse. Ferner kann ein Objekt auch eine physikalische oder logische Verbindungsleitung zur Übermittlung von Nachrichten darstellen (z.B. ein Kabel). Ferner kann ein Objekt abstrakte logische Daten wie Domänen und Endpunkte sowie Verbindungen von Ressourcen oder Kommunikationspfaden repräsentieren.

Vorzugsweise werden Objekte durch eine objektorientierte Programmiersprache wie Java realisiert. Hierbei können Objekte durch eine oder mehrere Java-Klassen gebildet werden oder durch EJB (Enterprise JavaBeans) bzw. durch ein CORBA-Objekt und entsprechende Stub-Hilfsklassen zur Kommunikation. Eine andere Form der Realisierung eines Objekts lässt sich durch eine geeignete Auswahl des Datenbankschemas der Referenzdatenbank 240 für die persistente Speicherung erzielen.

Eine Referenz ist die eindeutige Identifikation eines Objektes, das von einem anderen Objekt zu einem bestimmten Zweck benutzt wird bzw. zu diesem in einer bestimmten Beziehung steht. Eine solche Beziehung kann beispielsweise darin bestehen, dass ein Objekt in einem anderen enthalten ist. Dabei kann eine Referenz auf Objekte verschiedener Klassen (Objekttypen) verweisen und enthält alle Informationen zum Zugriff auf die persistent gespeicherten Daten. Dies wird erzielt, indem eine Referenz den Klassennamen des referenzierten Objekts enthält, sowie einen Verweis auf den Ort der persistenten Speicherung von Objekten der referenzierten Klasse, also z.B. auf die verwendete Datenbanktabelle in einer relationalen Datenbank. Eine Referenz enthält somit den Schlüssel zum Zugriff auf die persistent gespeicherten Attribute des referenzierten Objekts.

Vorzugsweise werden dynamische Objektreferenzen verwendet, die in Systemen mit verteilten Objekten anwendbar sind, z.B. CORBA und EJB. Hierbei ist zwischen dem Client (dem Nutzer eines Dienstes) und dem Server (dem Lieferanten des Dienstes) zu unterscheiden. Ein einzelnes Programm kann für den einen Dienst der Client und gleichzeitig für einen anderen Dienst der Server sein. Ein Programm kann auch eine Methode eines Objektes sein.

Der Inhalt der Referenzen wird vom Programm zur Laufzeit interpretativ ausgewertet. Gemäß einer bevorzugten Ausgestaltung der Erfindung sind Referenzen in generischer Weise aufgebaut, wobei das Netzwerkmanagementprogramm den generischen Aufbau kennt. Die Referenz enthält keine weitere semantischen Informationen über den Inhalt, also beispielsweise keine Informationen über die Datenstruktur der Klasse des referenzierten Objekts. Somit kann das Netzwerkmanagementprogramm auch mit solchen Referenzen umgehen, die Objekte neuartiger Klassen referenzieren, die zum Zeitpunkt der Programmerstellung noch nicht bekannt waren.

In einer bevorzugten Ausgestaltung der Erfindung sind Referenzen zur Programmlaufzeit immer vom selben Datentyp. Vorzugsweise werden Referenzen persistent in einem Datenbankfeld als String abgespeichert.

Ein bevorzugter Aufbau einer Referenz besteht aus dem Java-Klassennamen und einer eindeutigen Identitätskennung, welche die verschiedenen Instanzen der Klasse, also die Objekte, eindeutig unterscheidet. Liegen beispielsweise die Klassen Network und GateNE vor, so sind Referenzen beispielsweise Network_1, Network_2, GateNE_IPRouter_1, GateNE_IPRouter_2, u.a.

Die Referenz enthält somit alle Informationen, die zur Rekonstruktion des Objektes notwendig sind. Ein Objekt wird immer dann aus einer Referenz rekonstruiert, wenn eine oder mehrere Methoden eines Objekts aufgerufen werden sollen. Methoden sind ausführbare Programmroutinen, die Teil des jeweiligen Objekts sind. Der Code, der die Methoden auf dem referenzierten Objekt aufruft, also das auf dem Client laufende Programm, nutzt die zur Programmerstellungszeit noch unbekannte neue Klasse im Server. Er interpretiert das Referenzattribut vom Typ String durch Anwendung einer Namenskonvention zur Programmlaufzeit und nutzt dann entsprechende Mittel der Programmiersprache, um die neuen Klassen zu laden und dann Methoden der Objekte auf dem Server anzusprechen.

Fig. 3 zeigt ein Flussdiagramm, das diesen Prozess näher darstellt. Zunächst liest die Steuereinheit 210 aus der Referenzdatenbank 240 eine Referenz im Schritt 310 aus. Eine Referenz kann alternativ auch das Ergebnis des Aufrufs einer Methode eines anderen Objektes sein. Dann wird im Schritt 320 zur Laufzeit die Klasse des referenzierten Objekts ermittelt. Dies geschieht in dem vorgenannten Beispiel durch Auswerten des Referenzstrings, das den Klassennamen enthält.

Die Klasse wird nun, ebenfalls zur Laufzeit, geladen (Schritt 330), was in der Programmiersprache Java beispielsweise durch das sogenannte Reflection API und den integrierten ClassLoader ermöglicht wird. In Schritt 340 wird dann das referenzierte Objekt als Instanz der ermittelten und geladenen Klasse zur Laufzeit erzeugt. Schließlich werden in Schritt 350 eine oder mehrere Methoden der erzeugten Instanzen zur Laufzeit aufgerufen.

Unter Bezugnahme auf Fig. 4 wird nun ein Beispiel näher erläutert, wie die vorgenannte Technik zur Durchführung eines Netzwerkmanagements für ein Netzwerk erfolgen kann. Das in Fig. 4 gezeigte Flussdiagramm zeigt einen Prozess, mit dem das Client-Programm eine Beschreibung des Netzwerks ermitteln soll. In dem Beispiel wird das Netzwerk zur Vereinfachung lediglich durch die folgenden Klassen beschrieben:
Klasse IPRouter:
   Methode getNextHop()
   Methode getDescription()
Klasse LanSwitch:
   Methode getNextHop()
   Methode getDescription()

Die beiden Klassen IPRouter und LanSwitch implementieren jeweils die Methoden getNextHop() und getDescription(). getNexHop() liefert eine oder mehrere Referenzen auf die logisch mit dem aktuellen Objekt verbundenen Objekte. getDescription() liefert eine Beschreibung des aktuellen Objekts.

In dem in Fig. 4 gezeigten Prozess startet das Programm in Schritt 410 durch Wahl eines Startobjekts, beispielsweise ausgehend von einem bekannten Objekt im Netzwerk, dessen Referenz vom Operator eingegeben werden kann. Die Eingabe der Referenz durch den Operator kann beispielsweise durch direkte Eingabe des Referenzstrings erfolgen, falls dieser bekannt ist. Alternativ hierzu wählt der Operator an einer Bedienoberfläche ein Objekt z.B. mit einer Maus aus. In diesem Fall muss dann der Referenzstring aus der Referenzdatenbank 240 ausgelesen werden.

Im Schritt 420 wird, in dem erwähnten altenativen Vorgehen, zu dem ausgewählten Startobjekt der Referenzstring aus der Referenzdatenbank 240 ausgelesen. Dann wird aus dem Referenzstring der Name des Factory-Objektes (J2EE = Home Interface) durch Anwendung der Namenskonvention ermittelt. Unter Bezugnahme auf die obengenannten Beispiele wird z.B. aus IPRouter_2 der Name IPRouterHome des Factory-Objekts als String ermittelt. In einem anderen Beispiel wird der Factory-Name LanSwitchHome aus LanSwitch_1111 gewonnen. Falls die Klasse des ermittelten Factory-Objekts unbekannt ist, wird das Programm abgebrochen bzw. eine neue Referenz abgefragt.

Nachdem der Name des Factory-Objekts auf diese Weise in Schritt 430 ermittelt worden ist, wird das Factory-Objekt durch Nutzung des Reflection API erzeugt.
Object fObject = Class.forName(factoryName)

Dann wird im Schritt 450 durch Aufruf der Methode findByPrimaryKey() eine CORBA-Referenz auf das Objekt erzeugt.
Object rObjectRemote = fObject.findByPrimaryKey(refString) Falls das gesuchte CORBA-Objekt im Server noch nicht existiert, wird es von dort aus der Datenbank geladen.

Nun wird im Schritt 460 eine Anforderung vom Client an den Server gesendet. Hierzu wird im Client nur ein Stub (via rObjectRemote) angesprochen. Im Server wird der Aufruf umgeleitet auf die konkrete Implementierung der Klasse. Der Server kennt den persistenten Speicherort der das Netzwerk beschreibenden Daten und verfügt über die notwendigen Mittel, um aus dem Inhalt der Datenbank das Serverobjekt zu erzeugen.

Das erzeugte Serverobjekt kann nun im Schritt 470 genutzt werden, um die gewünschten Methoden aufzurufen.
rObjectRemote.invoke("getDescription",...)
rObjectRemote.invoke("getNextHop",...)

Mit dem Ergebnis von getNextHop(), das in der Regel eine Anzahl von Referenzen liefert, kann der Client durch wiederholte Anwendung der Schritte 420 bis 470 alle Objekte finden, die das Netzwerk beschreiben. Hierzu sieht der Prozess eine Verzweigung 480 vor, die eine Wiederholung der vorgenannten Schritte veranlasst, wenn noch weitere Referenzen vorliegen.

Das vorgehend beschriebene bevorzugte Ausführungsbeispiel gibt daher eine Möglichkeit an, wie durch persistente Speicherung dynamischer Objektreferenzen ein Netzwerkmanagement durchgeführt werden kann. Da hierbei die Methoden getDescription() und getNextHop() allein mit Hilfe der jeweils abgelegten Objektreferenzen (und dem jeweiligen Methodennamen) auffindbar sind, ist keine persistente Speicherung von klassenbezogenen Daten erforderlich. Die Anwendung der dynamischen Objektreferenzen erlaubt es daher, die Implementierung eines Servers für einen Dienst zu ersetzen oder zu entfernen, bzw. weitere Server hinzuzufügen, ohne dass dies eine Änderung, Neuprogrammierung, Neuübersetzung, einen Upgrade oder Neustart der laufenden Client-Programme erfordern würde.

Statt dessen sind nur außerhalb des Netzwerkmanagementprogramms liegende Maßnahmen erforderlich, wenn zur Laufzeit des Programms beispielsweise eine neue Klasse von Objekten in das System eingebracht wird, die eine völlig neue Art der Implementierung von getNextHop() erfordern. Wenn beispielsweise zu einem Netzwerk Objekte einer in dem Netzwerk bisher nicht vorhandenen Klasse ATMSwitch hinzugefügt wird, müssen auf dem Serverrechner die Implementierung der Klasse ATMSwitch und deren Stub-Klassen eingebracht und in den Server geladen werden, beispielsweise mittels Deployen in Java EJB. Dann müssen Instanzen der Klasse ATMSwitch im Server erzeugt und Referenzen auf die erzeugten Objekte in einigen der vorhanden Objekte hinzugefügt werden.

Auf dem Client-Rechner müssen lediglich Stub-Klassen von ATMSwitch in den Classloaderpfad eingebracht werden. Eine Änderung des Netzwerkmanagementprogramms oder des Datenformats der persistenten Speicherung sind hingegen nicht erforderlich. Das Netzwerkmanagementprogramm kann die neuen Objekte daher ohne Betriebsunterbrechung nutzen.

## Patentansprüche

1. Verfahren zum Durchführen eines Netzwerkmanagements für ein Netzwerk, das eine Vielzahl von Netzwerkkomponenten (120, 130, 140, 150, 160, 170, 180, 190) aufweist, mit den folgenden Schritten:
Abrufen (350, 470) von das Netzwerk beschreibenden Daten von wenigstens einer Netzwerkkomponente, wobei die das Netzwerk beschreibenden Daten Informationen über im Netzwerk enthaltene Netzwerkkomponenten umfassen, und
**gekennzeichnet durch**
Speichern der abgerufenen Informationen in einem persistenten Datenspeicher (240),
wobei das Speichern der abgerufenen Informationen **durch** Ablegen von Objektreferenzen in einer Datenbank (240) erfolgt,
eine Objektreferenz eine eindeutige Identifikation eines Objekts ist,
ein Objekt eine programmtechnische Repräsentation einer Netzwerkkomponente ist und eine ausführbare Programmroutine enthält, die bei ihrem Aufruf als Rückgabewert Daten ausgibt, die die abzuspeichernden Informationen enthalten, und
die Programmroutine allein mit Hilfe der jeweiligen abgelegten Objektreferenz auffindbar ist.

2. Verfahren nach Anspruch 1, wobei die referenzierten Objekte je nach ihrem Objekttyp in Klassen klassifiziert sind und die Objektreferenzen den Namen der Klasse des jeweiligen referenzierten Objekts enthalten.

3. Verfahren nach Anspruch 2, wobei die Objektreferenzen ferner eine Identifizierungskennung enthalten, die das Objekt der jeweiligen Klasse als Instanz der Klasse eindeutig identifiziert.

4. Verfahren nach Anspruch 2 oder 3, wobei die Objektreferenzen vom Datentyp String sind und einem Aufbau unterliegen, der es gestattet, den Klassennamen aus dem Referenzstring anhand seiner Position zu extrahieren.

5. Verfahren nach einem der Ansprüche 1 bis 4, wobei die als Rückgabewert ausgegebenen Daten der Programmroutine weitere Objektreferenzen enthalten.

6. Verfahren nach einem der Ansprüche 1 bis 5, wobei eine Netzwerkkomponente ein physikalisches Gerät im Netzwerk ist.

7. Verfahren nach einem der Ansprüche 1 bis 6, wobei eine Netzwerkkomponente ein Bauteil oder eine Baugruppe eines physikalischen Geräts im Netzwerk ist.

8. Verfahren nach einem der Ansprüche 1 bis 7, wobei eine Netzwerkkomponente eine physikalische und/oder logische Kommunikationsverbindung ist.

9. Verfahren nach einem der Ansprüche 1 bis 8, wobei eine Netzwerkkomponente eine Domäne (170, 180, 190), ein Endpunkt (160) oder eine andere logische Netzwerkeinheit ist.

10. Verfahren nach einem der Ansprüche 1 bis 9, wobei eine Netzwerkkomponente ein Kommunikationsprofil für Protokolle ist.

11. Verfahren nach einem der Ansprüche 1 bis 10, wobei die programmtechnische Repräsentation eine Java-Repräsentation ist.

12. Verfahren nach einem der Ansprüche 1 bis 11, wobei die programmtechnische Repräsentation eine EJB-Repräsentation ist.

13. Verfahren nach einem der Ansprüche 1 bis 12, wobei die Programmroutine mit Hilfe der jeweiligen abgelegten Objektreferenz in einer CORBA-Implementierung auffindbar ist.

14. Verfahren nach einem der Ansprüche 1 bis 13, wobei die Objekte durch das Datenbankschema einer relationalen Datenbank realisiert sind.

15. Verfahren nach einem der Ansprüche 1 bis 14, wobei der Schritt des Abrufens die folgenden Unterschritte umfasst:
Auslesen (310) einer Objektreferenz,
Ermitteln (320) der Klasse des referenzierten Objekts,
Laden (330) der ermittelten Klasse,
Erzeugen (340) einer Instanz der geladenen Klasse, und
Aufrufen (350) der Programmroutine der erzeugten Instanz.

16. Verfahren nach einem der Ansprüche 1 bis 15, ferner den Schritt des Anpassens des Verfahrens an eine Netzwerkkomponente eines neuen Typs umfassend, wobei dieser Schritt die folgenden Unterschritte umfasst:
Implementieren einer Klasse, die den neuen Typ repräsentiert, in einem Server,
Erzeugen von Objekten als Instanzen der neuen Klasse im Server,
Hinzufügen von Referenzen auf die erzeugten Objekte in wenigstens einem der vorhandenen Objekte, und
Einbringen von Stub-Klassen der neuen Klasse in den Classloaderpfad eines Clients.

17. Netzwerkmanagementsystem zum Durchführen eines Netzwerkmanagements für ein Netzwerk, das eine Vielzahl von Netzwerkkomponenten aufweist, umfassend:
eine Einrichtung (210, 230) zum Abrufen von das Netzwerk beschreibenden Daten von wenigstens einer Netzwerkkomponente, wobei die das Netzwerk beschreibenden Daten Informationen über im Netzwerk enthaltene Netzwerkkomponenten umfassen, und
**gekennzeichnet durch**
Mittel zum persistenten Speichern in einen Speicher (240) der abgerufenen Informationen **durch** Ablegen von Objektreferenzen in einer Datenbank, wobei eine Objektreferenz eine eindeutige Identifikation eines Objekts ist, wobei ein Objekt eine programmtechnische Repräsentation eine Netzwerkkomponente ist und eine ausführbare Programmroutine enthält, die bei ihrem Aufruf als Rückgabewert Daten ausgibt, die die abzuspeichernden Informationen enthalten,
wobei die Programmroutine allein mit Hilfe der jeweiligen abgelegten Objektreferenz auffindbar ist.

18. Netzwerkmanagementsystem nach Anspruch 17, eingerichtet zur Durchführung des Verfahrens nach einem der Ansprüche 2 bis 16.

## Claims

1. Method for managing a network comprising a plurality of network components (120, 130, 140, 150, 160, 170, 180, 190), comprising the following steps:
retrieval (350, 470) of the data describing the network by at least one network component, whereby the data describing the network includes information about the network components contained in the network, and
**characterized by**
storage of the retrieved information in a persistent data storage (240),
whereby the retrieved information is stored by filing of object references in a database (240),
an object reference is used for the unambiguous identification of an object,
an object is a program representation of a network component, containing an executable program routine which, when called, emits data containing the information to be stored, as a return value, and
the program routine can be localized solely by means of the respective filed object reference.

2. Method according to claim 1, whereby the referenced objects are classified into classes according to their object type and the object references contain the name of the class of the object referenced in each case.

3. Method according to claim 2, whereby the object references also contain an identification code which unambiguously identifies the object of the relevant class as an entity of the class.

4. Method according to claim 2 or 3, whereby the object references of the data type are a string and are based on a construction that permits the class name to be extracted from the reference string on the basis of its position.

5. Method according to one of claims 1 to 4, whereby the data of the program routine, that is emitted as a return value, contains further object references.

6. Method according to one of claims 1 to 5, whereby a network component is a physical device in the network.

7. Method according to one of claims 1 to 6, whereby a network component is a component or a module of a physical device in the network.

8. Method according to one of claims 1 to 7, whereby a network component is a physical and/or logical communication connection.

9. Method according to one of claims 1 to 8, whereby a network component is a domain (170, 180, 190), an end point (160), or another logical network unit.

10. Method according to one of claims 1 to 9, whereby a network component is a communication profile for protocols.

11. Method according to one of claims 1 to 10, whereby the program representation is a Java representation.

12. Method according to one of claims 1 to 11, whereby the program representation is an EJB representation.

13. Method according to one of claims 1 to 12, whereby the program routine can be localized by means of the respective filed object reference in a CORBA implementation.

14. Method according to one of claims 1 to 13, whereby the objects can be implemented by the database scheme of a relational database.

15. Method according to one of claims 1 to 14, whereby the query step comprises the following substeps:
readout (310) of an object reference,
definition (320) of the class of the referenced object,
loading (330) of the defined class,
production (340) of an entity of the loaded class, and
calling (350) of the program routine for the produced entity.

16. Method according to one of claims 1 to 15, further comprising the step of adapting the method to a network component of a new type, whereby this step comprises the following substeps:
implementation of a class that represents the new type, in a server,
production of objects as entities of the new class in the server,
addition of references to the produced objects in at least one of the existing objects, and
importation of stub classes of the new classes into the class loader path of a client.

17. Network management system for managing a network comprising a plurality of network components, comprising:
a device (210, 230) for the querying of data describing the network by at least one network component, whereby the data describing the network includes information about the network components contained in the network, and
**characterised by** means for persistent storage in a memory (240) of the retrieved information by filing of object references in a database, whereby an object reference is used for the unambiguous identification of an object, whereby an object is a program representation of a network component, containing an executable program routine which, when called, emits data containing the information to be stored, as a return value,
whereby the program routine can be localized solely by means of the respective filed object reference.

18. Network management system according to claim 17, set up in order to implement the method according to one of claims 2 to 16.

## Revendications

1. Procédé pour la mise en oeuvre d'une gestion de réseau pour un réseau qui présente une pluralité de composants de réseau (120, 130, 140, 150, 160, 170, 180, 190), avec les étapes suivantes :
appel (350, 470) de données décrivant le réseau par au moins un composant du réseau, les données décrivant le réseau contenant des informations sur des composants du réseau contenus dans le réseau, et
**caractérisé par**
la mémorisation des informations appelées dans une mémoire de données persistante (240),
le stockage des informations appelées s'effectuant par le dépôt de références d'objets dans une banque de données (240),
une référence d'objet étant une identification univoque d'un objet,
un objet étant une représentation technique par programme d'un composant du réseau et contenant une routine de programme exécutable, qui envoie des données lors de leur appel comme valeur de restitution, lesquelles contiennent les informations à stocker, et
la routine de programme pouvant être trouvée uniquement à l'aide de la référence d'objet déposée respective.

2. Procédé selon la revendication 1, les objets référencés étant classifiés en classes selon leur type d'objet et les références d'objets contenant le nom de la classe de l'objet référencé respectif.

3. Procédé selon la revendication 2, les références d'objets contenant également un code d'identification, qui identifie univoquement l'objet de la classe respective comme instance de la classe.

4. Procédé selon la revendication 2 ou 3, les références d'objets étant du type de données string et étant soumises à une mise en place qui permet d'extraire le nom de classe du string de référence à l'aide de sa position.

5. Procédé selon l'une quelconque des revendications 1 à 4, les données éditées comme valeur de restitution du programme de routine contenant d'autres références d'objet.

6. Procédé selon l'une quelconque des revendications 1 à 5, un composant du réseau étant un appareil physique dans le réseau.

7. Procédé selon l'une quelconque des revendications 1 à 6, un composant du réseau étant un élément de construction ou un ensemble d'un appareil physique dans le réseau.

8. Procédé selon l'une quelconque des revendications 1 à 7, un composant du réseau étant une liaison de communication physique et/ou logique.

9. Procédé selon l'une quelconque des revendications 1 à 8, un composant du réseau étant un domaine (170, 180, 190), un point d'extrémité (160) ou une autre unité de réseau logique.

10. Procédé selon l'une quelconque des revendications 1 à 9, un composant du réseau étant un profil de communication pour protocoles.

11. Procédé selon l'une quelconque des revendications 1 à 10, la représentation technique par programme étant une représentation Java.

12. Procédé selon l'une quelconque des revendications 1 à 11, la représentation technique par programme étant une représentation EJB.

13. Procédé selon l'une quelconque des revendications 1 à 12, la routine de programme pouvant être trouvée à l'aide de la référence d'objet respective déposée dans une implémentation CORBA.

14. Procédé selon l'une quelconque des revendications 1 à 13, les objets étant réalisés par le schéma de banque de données d'une banque de données relationnelle.

15. Procédé selon l'une quelconque des revendications 1 à 14, l'étape de l'appel comprenant les sous-étapes suivantes :
extraction (310) d'une référence d'objet ;
détermination (320) de la classe de l'objet référencé,
chargement (330) de la classe déterminée,
génération (340) d'une instance de la classe chargée, et
appel (350) de la routine de programme de l'instance générée.

16. Procédé selon l'une quelconque des revendications 1 à 15, comprenant également l'étape de l'adaptation du procédé à une composante du réseau d'un nouveau type, cette étape comprenant les sous-étapes suivantes:
implémentation d'une classe qui représente le nouveau type, dans un serveur,
génération d'objets comme instances de la nouvelle classe dans le serveur,
ajout de références aux objets générés dans au moins l'un des objets présents, et
introduction de classes Stub de la nouvelle classe dans le chemin Classloader d'un client.

17. Système de gestion de réseau pour la mise en oeuvre d'une gestion de réseau pour un réseau qui présente une pluralité de composants de réseau, comprenant :
un dispositif (210, 230) pour l'appel de données décrivant le réseau d'au moins un composant de réseau, les données décrivant le réseau comprenant des informations sur les composants du réseau contenus dans le réseau, et
**caractérisé par**
des moyens pour la mémorisation persistante dans une mémoire (240) des informations appelées par la dépose de références d'objets dans une banque de données, une référence d'objet étant une identification univoque d'un objet, un objet étant une représentation technique par programme d'un composant de réseau et contenant une routine de programme exécutable, qui émet lors de son appel comme valeur de restitution des données qui contiennent les informations à stocker,
la routine de programme pouvant être trouvée uniquement à l'aide de la référence d'objet déposée respective.

18. Système de gestion de réseau selon la revendication 17, aménagé pour la mise en oeuvre du procédé selon l'une quelconque des revendications 2 à 16.
